# EUROPEAN PATENT APPLICATION

(11) **EP 2 724 837 A1**
(43) Date of publication of application: **30.04.2014**
(21) Application number: 13189999.9
(22) Date of filing: 24.10.2013
(51) Int. Cl.: B29C 47/60, B29C 47/10, B29C 47/08, B29C 47/62, B29B 7/42

(54) **Extruder screw with channel**

(30) Priority: 26.10.2012 US 201213661392
(71) Applicant: The Goodyear Tire & Rubber Company, Akron, Ohio 44316 (US)
(72) Inventor: Ripple, Warren Paul, North Canton, OH Ohio 44720 (US); Looman, Jr., Ernest Wilford, Tallmadge, OH Ohio 44278 (US); De Monte, Patrice, B-6700 Arlon (BE); Marshall, Malcolm George, Wadsworth, OH Ohio 44281 (US)
(74) Representative: Kutsch, Bernd

(57) **Abstract**

An extruder apparatus comprising a cylindrical barrel (20) having a feed end and a discharge end is disclosed. The feed end has an outlet in fluid communication with a feed device (23). The extruder apparatus further comprises an extruder screw (12) mounted in the cylindrical barrel (20), said screw (12) having an outer surface having one or more helical flights (30, 32) mounted thereon. The screw (12) further has a discharge end and a terminal end (21) and comprises at least one notch or channel (70).

## Description

### Field of the Invention

The invention relates in general to extruders for rubber processing, and more particularly to an extruder apparatus comprising an extruder screw.

### Background of the Invention

It is known in the art to extrude visco-elastic materials such as rubber, using a screw extruder. For example, see EP 0 798 097 A1. It is also known in the art to utilize a feedbox to feed slabs of rubber compound into the extruder.

One problem that may occur is that the slab of rubber will shear off due to slab feed tension, commonly referred to as slab "bite off". This typically occurs when low strength compounds are utilized, particularly tread compounds. The problem is worsened by the "scissors" action on the screw flights against the feed roll and feedbox. If the feed strip breaks, it will result in workers having to clean out the feed box. Thus it is desired to have an improved extruder screw that overcomes the slab bite off problem.

### Summary of the Invention

The invention relates to an extruder apparatus in accordance with claim 1. Dependent claims refer to preferred embodiments of the invention.

### Definitions

Feed Hopper - typically a cone-shaped slab feed "chute" which attaches to the top of an extruder feedbox. The feed hopper establishes folds in the compound slab feeding into the extruder.

Feedbox - that area of an extruder, where the screw is exposed to accept a rubber slab feed. Typical cold feed extruders have a driven feed roll assembly which forms a pinch area with the screw flights and serves to pull slab compound through the feed hopper and fill the screw flights. The feed roll assembly is usually a hinged assembly, which can be opened for cleaning and greater maintenance access to the screw and feedbox.

Cold Feed Extruder - a piece of machinery for processing visco-elastic materials, including rubber. This machine accepts cold compound in slab form, warms the compound and moves the compound from the feedbox to the end of the barrel, by means of a rotating mechanical screw.

### Brief Description of the Drawings

The invention will be described by way of example and with reference to the accompanying drawings in which:
FIG. 1 is a schematic cutaway view of an extruder and flow head assembly;
FIG. 2 is a top view of a feed box and feed roll; and
FIGS. 3-6 illustrate alternate embodiments of the notch for the extruder screw.

### Detailed Description of Example Embodiments of the Invention

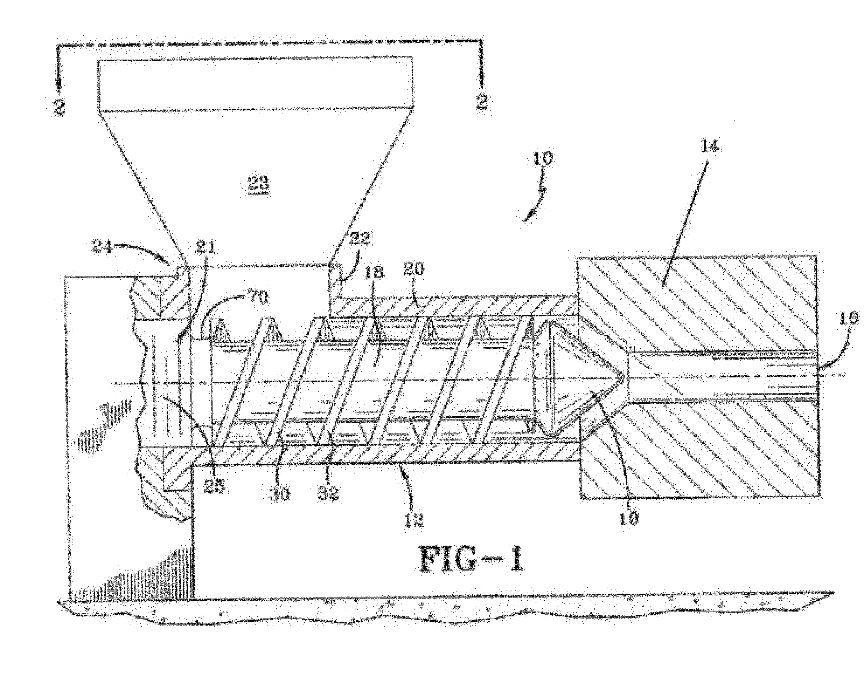

Figure 1 illustrates an extruder flow head assembly 10 which includes an extruder screw 12 connected to a flow head 14 with a flow channel 16 leading to a die (not shown). The screw together with the die may be used to form a rubber component of visco-elastic material, such as rubber.

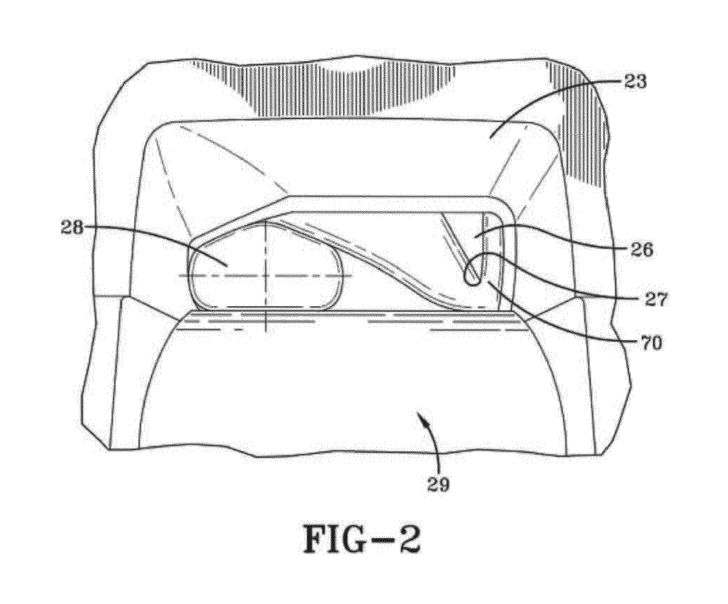

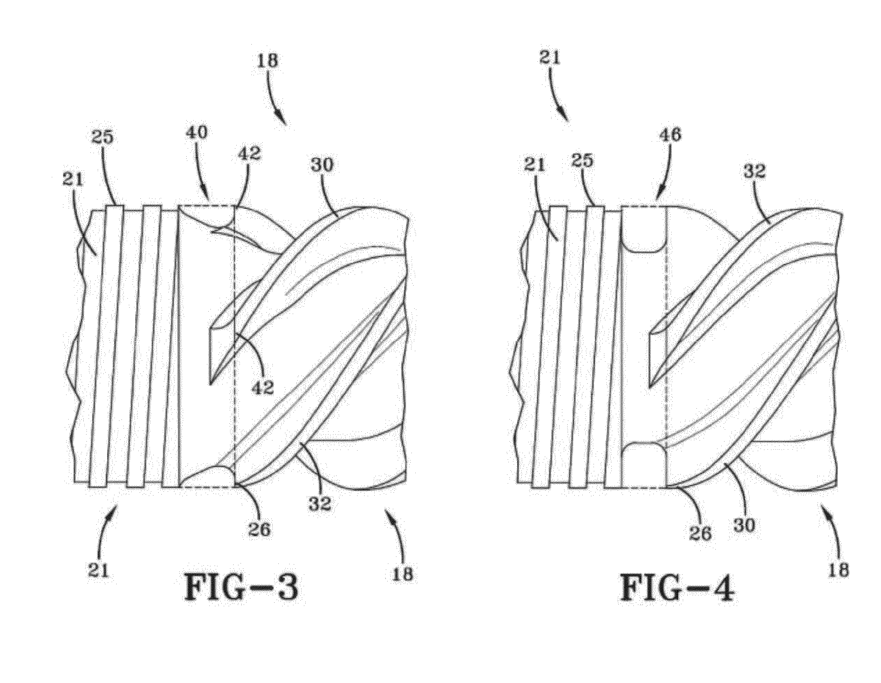

The extruder 12 has a screw 18 that is rotatable in a cylindrical barrel 20. The cylindrical barrel has an internal channel for housing the screw. The screw has an elongate cylindrical body having at least two helical screw flights 30, 32 mounted thereon. The screw 18 is typically rotated by power means such as a motor and gearbox (not shown). The screw 18 has a first discharge end forming a nose 19 and a second terminal end 21 preferably having shallow flights 25 for keeping compound out of the splined screw-to-gearbox interface (not shown). The barrel 20 has a feed opening 22 at an entrance end 24 of the extruder. The feed opening is connected to a feed device 23 such as a feed hopper or a feed box. Figure 2 illustrates such a feed box or feed hopper at the entrance end of the extruder. The feed device 23 has a screw, with the start of a screw flight 26. The screw depicted is a screw with a notch 70 machined into the screw in the area where the screw flight 26 starts. The action of the screw flight 26 against the feed roll 29 tends to cut the rubber slab feed going into the feed box. By machining a notch 70, 40, 46, 50, 60 or a channel into this area of the screw (40 on Figure 3) the screw flight 26 is discontinuous and the scissors action of the screw flight 26 against the feed roll will not cut off the compound slab feeding into the feedbox. The feed device (or feedbox) 23 typically exhibits a rolling ball 28 of compound, which indicates that the screw is properly fed (absence indicates underfeeding). It is important that the rubber slab being fed into the feedbox does not interfere with the rolling ball of compound, or the action of the rolling ball and the slab can also cause a slab bite-off. By directing the slab feed towards the rear of the feedbox and towards the screw notch or feed channel, interference with the rolling ball is avoided and the notch is allowed to provide a positive feeding assist. The use of a screw with a notch (or a respective channel) and a feed device such as a feed hopper with a guide keeping the slab from the rolling compound ball, greatly improves the occurrence of slab misfeeds, which are most prevalent with compounds having low "green strength".

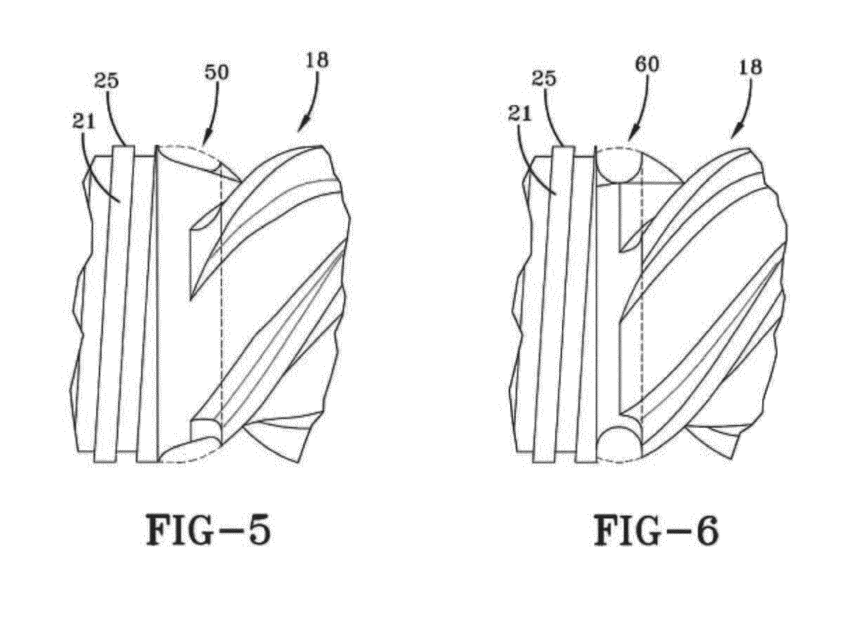

The rear end 21 of the extruder screw has been modified as shown in Figures 3-6. At the rear end 21 of the extruder end located where the helical flights are initiated, a notch 40 has been inserted in the screw flight at the terminal end near the feed device. As shown in Figure 3, the notch 40 is circumferentially continuous, i.e., it extends completely around the circumference of the screw. The notch cuts across the terminal ends 42 of the helical flights 30, 32. The notch as shown in Figure 3 is nonsymmetrical in shape. Figure 4 illustrates a symmetrical, U-shaped notch 46. Figure 5 illustrates another asymmetrical notch 50 having a shallow depth. Figure 6 illustrates a deep notch having a circular, symmetrical shape 60. The notch width (or channel width) of any of the above described notches (or channels) may range from 8 to 40 mm depending upon the screw size, (increasing notch width with increasing screw diameter). The notch depth (or channel depth) is preferably 1/3 to 2/3 of the notch width or channel width.

Experiments were conducted with a notched extruder screw over a range of speeds. It was observed that the notch reduced the number of misfeeds. It was also observed that directing the rubber into the feedbox area occupied by the rolling ball of compound could still cause a misfeed, but the action of the screw notch had the unexpected result that the feed was able to restart itself without any intervention. Complete clean-out of the extruder feedbox is typically required to reestablish normal compound feeding, with traditional extruder screws lacking the screw notch.

## Claims

1. An extruder apparatus comprising a cylindrical barrel (20) having a feed end and a discharge end, the feed end having an outlet in fluid communication with a feed device (23), the extruder apparatus further comprising an extruder screw (12) mounted in the cylindrical barrel (20), said screw (12) having an outer surface having one or more helical flights (30, 32) mounted thereon, and said screw (12) further having a discharge end and a terminal end (21), wherein the extruder screw (12) further comprises at least one notch (40, 46, 50, 60, 70) or channel.

2. The apparatus of claim 1 wherein the notch (40, 46, 50, 60, 70) or channel is circumferentially continuous about the extruder screw (12).

3. The apparatus of claim 1 or 2 wherein the notch (40, 46, 50, 60, 70) or channel has a symmetrical cross-sectional shape.

4. The apparatus of claim 1 or 2 wherein the notch (40, 46, 50, 60, 70) or channel has an asymmetrical cross-sectional shape.

5. The apparatus of at least one of the previous claims wherein the notch (40, 46, 50, 60, 70) or channel has a width in the range of from 5 to 40 mm.

6. The apparatus of claim 5 wherein the width is in the range of from 10 to 25 mm.

7. The apparatus of at least one of the previous claims wherein the notch (40, 46, 50, 60, 70) or channel is located adjacent the helical flights (30, 32).

8. The apparatus of at least one of the previous claims wherein the notch (40, 46, 50, 60, 70) or channel intersects at least one of the helical flights (30, 32).

9. The apparatus of at least one of the previous claims wherein the notch (40, 46, 50, 60, 70) or channel has a symmetrical U cross-sectional shape.

10. The apparatus of at least one of the previous claims wherein the notch (40, 46, 50, 60, 70) or channel has a semicircular cross-sectional shape.

11. The apparatus of at least one of the previous claims wherein the notch (40, 46, 50, 60, 70) or channel is between the helical flights (30, 32) and the terminal end (21).

12. The apparatus of at least one of the previous claims wherein the notch (40, 46, 50, 60, 70) or channel is between an entrance end (24) of the cylindrical barrel (20) and the helical flights (30, 32).

13. The apparatus of at least one of the previous claims wherein the screw (12) further comprises further, preferably shallow flights (25), and wherein the notch (40, 46, 50, 60, 70) or channel is located between the further flights (25) and the helical flights (30, 32).

14. The extruder apparatus of at least one of the previous claims wherein the feed device (23) is a feed hopper or feed box.

15. The extruder apparatus of at least one of the previous claims wherein the discharge end comprises a nose (19).
